# EUROPÄISCHE PATENTSCHRIFT

(11) **EP 3 423 242 B1**
(45) Veröffentlichungstag und Bekanntmachung des Hinweises auf die Patenterteilung: **25.03.2020**
(21) Anmeldenummer: 17708212.0
(22) Anmeldetag: 28.02.2017
(51) Int. Cl.: B25J 19/00, B25J 9/16

(54) **VERFAHREN ZUM ÜBERWACHEN EINER VERSORGUNGSLEITUNG EINES INDUSTRIEROBOTERS UND STEUERVORRICHTUNG**
METHOD FOR MONITORING A SUPPLY LINE OF AN INDUSTRIAL ROBOT, AND CONTROL DEVICE
PROCÉDÉ DE SURVEILLANCE D'UNE CONDUITE D'ALIMENTATION D'UN ROBOT INDUSTRIEL ET DISPOSITIF DE COMMANDE

(30) Priorität: 03.03.2016 DE 102016203552
(43) Veröffentlichungstag der Anmeldung: 09.01.2019
(73) Patentinhaber: KUKA Deutschland GmbH, 86165 Augsburg (DE)
(72) Erfinder: LORENZ, Marco, 01896 Pulsnitz (DE)
(74) Vertreter: Tillmann, Axel
(86) Internationale Anmeldenummer: PCT/EP2017/054656
(87) Internationale Veröffentlichungsnummer: WO 2017/148952

(56) Entgegenhaltungen:
- DE-A1-102006 056 235

## Beschreibung

Die Erfindung betrifft ein Verfahren zum Überwachen einer Versorgungsleitung eines Industrieroboters, die ein oder mehrere in einem Schutzschlauch geführte Leitungen aufweist, auf Verschleißschäden am Schutzschlauch. Die Erfindung betrifft außerdem eine Steuervorrichtung, insbesondere eines Industrieroboters, die eingerichtet und ausgelegt ist, das Verfahren durchzuführen.

Aus der DE 10 2006 056 235 A1 ist eine Kabelschutzvorrichtung für Energiezuführungen von Robotern bekannt, mit einem Kabelschutzschlauch, der zumindest eine flexible Außenhülle hat. Dort ist wenigstens ein Detektionsmittel zum Ermöglichen einer automatischen Erkennung eines Schadens der Außenhülle beschrieben. Das Detektionsmittel umfasst beispielsweise einen Drucksensor zum Detektieren eines Innendrucks des Kabelschutzschlauchs. Dabei kann der Kabelschutzschlauch eine Schnittstelle zum Verbinden des Detektionsmittels mit einer Steuereinheit eines den Kabelschutzschlauch umfassenden Roboters aufweisen. Die Außenhülle wird regelmäßig mit Hilfe des Detektionsmittels auf einen Schaden der Außenhülle hin überprüft und beim Vorliegen eines Schadens wenigstens ein Schadenssignal generiert. Allerdings muss hierbei der Innendruck im schadensfreien Betrieb innerhalb des Kabelschutzschlauchs stets vom Atmosphärendruck abweichen. Der dazu erforderliche ständige Innendruck muss andauernd erzeugt werden, und zwar indem die Kabelschutzvorrichtung eine Pumpe aufweist.

Aufgabe der Erfindung ist es, ein Verfahren zum Überwachen einer Versorgungsleitung eines Industrieroboters bereitzustellen, mit dem ein Schutzschlauch der Versorgungsleitung auf einfache und zuverlässige Weise auf Verschleißschäden kontrolliert werden kann.

Die Aufgabe der Erfindung wird gelöst durch ein Verfahren zum Überwachen einer Versorgungsleitung eines Industrieroboters, die ein oder mehrere in einem Schutzschlauch geführte Leitungen aufweist, auf Verschleißschäden am Schutzschlauch, aufweisend die Schritte:
- Erzeugen eines ersten Fluiddruckstoßes innerhalb des Schutzschlauches,
- anschließendes Erfassen des Fluiddrucks innerhalb des Schutzschlauches über einen vorgegebenen ersten Zeitabschnitt hinweg als einen ersten Fluiddruckverlauf,
- Speichern des ersten Fluiddruckverlaufs,
- Erzeugen eines zweiten Fluiddruckstoßes innerhalb des Schutzschlauches,
- anschließendes Erfassen des Fluiddrucks innerhalb des Schutzschlauches über einen vorgegebenen zweiten Zeitabschnitt hinweg als einen zweiten Fluiddruckverlauf,
- Vergleichen des zweiten Fluiddruckverlaufs mit dem gespeicherten ersten Fluiddruckverlauf,
- Ausgeben einer Verschleißwarnung, wenn ein durch das Vergleichen festgestellter Unterschied zwischen dem zweiten Fluiddruckverlauf und dem ersten Fluiddruckverlauf einen vorgegebenen maximalen Toleranzunterschied überschreitet.

Ein Industrieroboter weist im Allgemeinen einen Roboterarm und eine programmierbare Robotersteuerung (Steuervorrichtung) auf, die während des Betriebs die Bewegungsabläufe des Industrieroboters steuert oder regelt, indem ein oder mehrere insbesondere automatisch verstellbare Gelenke (Roboterachsen) durch insbesondere elektrische Antriebe oder Motoren bewegt werden, wobei die Robotersteuerung die Antriebe gemäß eines Roboterprogramms automatisch oder in einem Handfahrbetrieb steuern oder regeln kann. Die Robotersteuerung dient also dazu, die Gelenke des Roboterarms durch Ansteuern von Antrieben des Roboterarms zu verstellen, wodurch die Glieder des Roboterarms bewegt werden. Jeweils zwei benachbarte Glieder des Roboterarms können dabei durch ein einzelnes Gelenk gegeneinander verstellbar verbunden sein, welches die jeweilige Achse darstellt, die von einem zugeordneten Antrieb bewegt wird.

Unter einer Versorgungsleitung wird insbesondere eine Energieleitung und/oder eine Energiezuführung verstanden, die ein oder mehrere Einzelleitungen, wie beispielsweise elektrische Leitungen, Kalt- und/oder Warmwasserleitungen, Fluid- und/oder Druckleitungen zu Werkzeugen, die an dem Roboter angeflanscht sind, aufweisen kann. Die Versorgungsleitung, insbesondere die Energieleitung und/oder die Energiezuführung kann in Einzelsträngen oder in Kabelbündel zusammengefasst und insbesondere mit einem oder mehreren flexiblen Schutzschläuchen, wie beispielsweise Wellschläuchen ummantelt sein.

Ein Teilabschnitt der Versorgungsleitung kann in einem Leitungsspeicher vorgehalten sein, derart, dass der Teilabschnitt aus dem Leitungsspeicher herausgezogen und wieder hineingeschoben oder hineingezogen werden kann, um die am Roboterarm frei verfügbare Länge der Versorgungsleitung verlängern oder wieder verkürzen zu können. Der Leitungsspeicher kann insbesondere an dem Grundarm angeordnet sein. Ein solcher Leitungsspeicher wir auch als Energiezuführungsvorrichtung für Industrieroboter bezeichnet und ist beispielsweise in der EP 2 244 867 B1 näher beschrieben.

Die bisherigen Verfahren zum Überwachen einer Versorgungsleitung eines Industrieroboters auf Verschleißschäden am Schutzschlauch, welche einen Drucksensor verwenden, um einen Innendruck des Schutzschlauches zu detektieren, arbeiten nach dem Prinzip der Überwachung der Druckdichtheit des Schutzschlauches. Dies bedeutet, dass nicht nur der Mantel des Schutzschlauches selbst druckdicht, d.h. luftundurchlässig sein muss, sondern auch die Enden des Schutzschlauches, aus welchen die einzelnen Leitungen oder Leitungsbündel aus dem Schutzschlauch austreten müssen druckdicht ausgeführt, d.h. luftundurchlässig abgedichtet sein. Nur so kann ein ständiger Überdruck innerhalb des Schutzschlauches aufrechterhalten werden, der ein Indiz für die Unversehrtheit, d.h. die Beschädigungsfreiheit des Schutzschlauches darstellt. Dies bedingt einen aufwändigen Aufbau der Versorgungsleitung hinsichtlich seiner Dichtheit und trägt ein hohes Risiko dafür, dass während des Betriebs der Versorgungsleitung am Industrieroboter es zu Undichtigkeiten kommen kann, die nicht auf einer Beschädigung des Schutzschlauches beruhen und somit fälschlicherweise einen Verscheiß anzeigen, obwohl tatsächlich keiner vorliegt.

Erfindungsgemäß wird deshalb vorgeschlagen, zur Überwachung der Versorgungsleitung auf Verschleißschäden am Schutzschlauch einen und insbesondere in zeitlichen Abständen folgend mehrere Fluiddruckstöße innerhalb des Schutzschlauches zu erzeugen und lediglich diese Fluiddruckstöße zu erfassen und mit wenigstens einem voran gegangenen Fluiddruckverlauf zu vergleichen, um eine Aussage über eine Beschädigung des Schutzschlauches zu erhalten. Dies hat den Vorteil, dass die Versorgungsleitung, insbesondere der Schutzschlauch nicht zwingend druckdicht ausgeführt sein muss. So kann ein bauartbedingter Druckverlust beispielsweise über die Enden des Schutzschlauches aus denen die Leitungen der Versorgungsleitung austreten berücksichtigt werden, ohne dass dieser bauartbedingte Druckverlust zum Ausgeben einer Verschleißwarnung führt. In Folge dessen kann die Versorgungsleitung einfacher und kostengünstiger hergestellt werden. Darüber hinaus verringert sich das Auftreten von falschen Verschleißwarnungen.

Das Erzeugen eines ersten Fluiddruckstoßes innerhalb des Schutzschlauches und das anschließende Erfassen des Fluiddrucks innerhalb des Schutzschlauches über einen vorgegebenen ersten Zeitabschnitt hinweg als einen ersten Fluiddruckverlauf kann beispielsweise werksseitig oder bei der Inbetriebnahme der Versorgungsleitung, insbesondere des Industrieroboters erfolgen, wenn die ordnungsgemäße, verschleißfreie Ausbildung der Versorgungsleitung und insbesondere des Schutzschlauches bekannt ist. Der erste Fluiddruckverlauf kann insoweit als ein Referenzdruckverlauf gespeichert werden. Das Speichern kann insbesondere auf einem nicht-flüchtigen Speichermedium innerhalb der Robotersteuerung des Industrieroboters und/oder einer Prüfvorrichtung erfolgen. Dabei ist es bevorzugt vorgesehen, dass das Beaufschlagen der Versorgungsleitung mit dem ersten Fluiddruckstoß in einer vorbestimmten bzw. vordefinierten Pose des Industrieroboters erfolgt, die insbesondere zusammen mit dem ersten Fluiddruckverlauf gespeichert wird. Insbesondere ist die Länge der Versorgungsleitung, die sich in Leitungsspeicher befindet vordefiniert bzw. vorbestimmt.

Alternativ oder ergänzend können während des Betriebs der Versorgungsleitung, insbesondere des Industrieroboters, wiederholt, beispielsweise in vorgegebenen Zeitabständen, Messungen durchgeführt werden, um den momentanen Fluiddruckverlauf innerhalb des Schutzschlauches zu erfassen, wenn ein weiterer Fluiddruckstoß ausgeführt wurde. Statt einem Vergleich mit dem ersten Fluiddruckverlauf, insbesondere mit dem Referenzdruckverlauf kann auch ein zweiter Fluiddruckverlauf mit einem dritten Fluiddruckverlauf oder einem weiteren Fluiddruckverlauf verglichen werden. Dadurch kann auch eine allmähliche Veränderung des Fluiddruckverlaufs im Schutzschlauch festgestellt und auf einen allmählich eintretenden Verschleiß des Schutzschlauches geschlossen werden. Dies kann beispielsweise ein sich durch Scheuern allmählich vergrößerndes Loch in der Mantelwand des Schutzschlauches sein. Bevorzugt können die gemessenen weiteren (zweiten, dritten, vierten, usw.) Fluiddruckstöße ebenfalls auf einem nicht-flüchtigen Speichermedium innerhalb der Robotersteuerung des Industrieroboters und/oder einer Prüfvorrichtung gespeichert werden. Dabei ist es bevorzugt vorgesehen, dass das Beaufschlagen der Versorgungsleitung mit einem weiteren Fluiddruckstoß in einer vorbestimmten bzw. vordefinierten Pose des Industrieroboters erfolgt, bevorzugt die gleiche Pose, in welcher der erste Fluiddruckstoß gemessen wurden, wobei insbesondere diese Pose zusammen mit dem weiteren Fluiddruckverlauf gespeichert wird. Insbesondere ist die Länge der Versorgungsleitung, die sich in Leitungsspeicher befindet vordefiniert bzw. vorbestimmt, insbesondere zu der Länge der Versorgungsleitung des ersten Fluiddruckstoßes identisch.

Die Erfassung des Fluiddruckstoßes, insbesondere das Messen des Innendrucks im Schutzschlauch kann kurz vor einem Auslösen eines Fluiddruckstoßes beginnen oder gleichzeitig mit dem Auslösen eines Fluiddruckstoßes beginnen und über einen auf den Moment des Fluiddruckstoßes folgenden, vorgegebenen Zeitabschnitt hinweg erfolgen.

Der Toleranzunterschied berücksichtigt Druckschwankungen, die beispielsweise aufgrund Temperaturänderungen in der Umgebung, aufgrund der Bewegungen der Versorgungsleitung während des Ansteuerns des Industrieroboters auftreten können und/oder beispielsweise aus Messungenauigkeiten resultieren. Diese (geringfügigen) Druckschwankungen bedeuten noch keine Beschädigung des Schutzschlauches und sollen noch keine Verschleißwarnung auslösen. Der Toleranzunterschied ist ein vorgegebener Wert, der beispielsweise empirisch zu ermitteln ist und insoweit einen Schwellwert bildet, der zunächst erreicht werden muss, bevor eine Verschleißwarnung ausgelöst werden soll.

Das Erzeugen des ersten Fluiddruckstoßes und das Erzeugen des zweiten Fluiddruckstoßes kann durch Einblasen von über den Umgebungsdruck der Versorgungsleitung komprimierter Luft oder komprimiertem Gas in den Schutzschlauch erfolgen. Allgemein können die erfindungsgemäßen Verfahren mit beliebigen Fluids, ob gasförmig oder flüssig, durchgeführt werden. Dann ist jedoch meist ein Vorrat an diesem Fluid, beispielsweise in einem Speicherbehälter, vorzusehen. Die Verwendung von Luft hat den Vorteil, dass die Luft nicht aus einem Speicherbehälter zugeführt werden muss, sondern unmittelbar aus der Umgebung, beispielsweise durch Ansaugen entnommen werden kann.

Das Einblasen von über den Umgebungsdruck der Versorgungsleitung komprimierter Luft oder komprimiertem Gas in den Schutzschlauch kann dadurch erfolgt, dass von einem Druckerzeuger komprimierte Luft oder komprimiertes Gas über eine Fluidleitung in das Innere des Schutzschlauches geleitet wird und zwar über ein automatisch zu betätigendes Ventil hinweg, welches zum Erzeugen des ersten Fluiddruckstoßes und des zweiten Fluiddruckstoßes kurzzeitig geöffnet wird.

Die Erfindung kann somit eine Versorgungsleitung umfassen oder einen Industrieroboter mit einer Versorgungsleitung umfassen, die einen Druckerzeuger, insbesondere eine Pumpe aufweist, welche über eine Druckleitung mit dem Inneren des Schutzschlauches verbunden ist, und die Versorgungsleitung des Weiteren ein Erfassungsmittel, insbesondere einen Sensor, wie einen Drucksensor aufweist, welcher ausgebildet und eingerichtet ist, den Innendruck im Schutzschlauch zu erfassen.

Die Versorgungsleitung kann mit einer Steuervorrichtung verbunden sein und/oder der Industrieroboter kann eine Steuervorrichtung aufweisen, die eingerichtet ist, einen ersten Fluiddruckstoß innerhalb des Schutzschlauches zu erzeugen, anschließend den Fluiddruck innerhalb des Schutzschlauches über einen vorgegebenen ersten Zeitabschnitt hinweg als einen ersten Fluiddruckverlauf zu erfassen und zu speichern, einen zweiten Fluiddruckstoß innerhalb des Schutzschlauches zu erzeugen, anschließend den Fluiddruck innerhalb des Schutzschlauches über einen vorgegebenen zweiten Zeitabschnitt hinweg als einen zweiten Fluiddruckverlauf zu erfassen, und den zweiten Fluiddruckverlauf mit dem gespeicherten ersten Fluiddruckverlauf zu vergleichen und eine Verschleißwarnung auszugeben, wenn ein durch das Vergleichen festgestellter Unterschied zwischen dem zweiten Fluiddruckverlauf und dem ersten Fluiddruckverlauf einen vorgegebenen maximalen Toleranzunterschied überschreitet.

Das Vergleichen des zweiten Fluiddruckverlaufs mit dem gespeicherten ersten Fluiddruckverlauf kann erfolgen, indem ein nach dem Erreichen eines Druckmaximums auftretender Druckabfall im zweiten Fluiddruckverlauf mit einem nach dem Erreichen eines Druckmaximums aufgetretenen Druckabfall im ersten Fluiddruckverlauf verglichen wird.

Die einzelnen Leitungen der Versorgungsleitung werden, insbesondere wegen einer notwendigen Zugentlastung, üblicherweise durch einen sogenannten Klemmstern, einer Kabelklemme, gehalten und mit dem Schutzschlauch kraftschlüssig verbunden. Dadurch bildet der Schutzschlauch ein zwar annähernd aber nicht vollständig abgeschlossenes Volumen. In den Schutzschlauch kann eine Fluiddruckleitung geführt werden, die innerhalb des Schutzschlauches ein offenes Ende hat. Beispielsweise ein Pneumatikventil kann die Fluiddruckleitung automatisch angesteuert öffnen und schließen. Des Weiteren ist der Versorgungsleitung wenigstens ein Drucksensor zugeordnet. Die Versorgungsleitung kann den Drucksensor aufweisen, insbesondere kann der Drucksensor innerhalb des Schutzschlauches angeordnet sein. Der Drucksensor kann aber auch außerhalb der Versorgungsleitung, insbesondere außerhalb des Schutzschlauches, insbesondere getrennt von der Versorgungsleitung angeordnet sein. In diesem Fall kann der Drucksensor in einer separaten Leitung, insbesondere in einem separaten Schlauch angeordnet sein, der mit dem Inneren des Schutzschlauches verbunden ist. Der separate Drucksensor kann über die separate Leitung oder den separaten Schlauch pneumatisch mit dem Inneren des Schutzschlauches verbunden sein.

Die Ventileinheit, beispielsweise das Pneumatikventil kann außerhalb des Schutzschlauches an einen beliebigen Ort angebracht sein und ist durch die Fluiddruckleitung, die ein einfacher Luftschlauch sein kann, mit dem Schutzschlauch der Energiezuführung verbunden. Durch die Fluiddruckleitung, insbesondere durch den Luftschlauch kann man dann den Schutzschlauch kurzfristig, insbesondere stoßartig mit Druck beaufschlagen. Da das System nicht zwingend druckdicht sein muss, wird der Druck innerhalb des Schutzschlauches mehr oder weniger schnell wieder abfallen. Während dieser Zeit kann der Druckverlauf gemessen und aufgezeichnet werden. Dies, d.h. die Zeit und der Verlauf des Druckabbaus kann insbesondere bei neu verbauter Versorgungsleitung, d.h. neu verbauter Energiezuführung als Referenzkurve abgespeichert werden.

Sollte der Schutzschlauch aufgrund von Verschleiß bereits ein Loch aufweisen, verändert sich das Verhalten von Zeit zum Druckabbau maßgeblich. Somit kann automatisch eine Verschleißwarnung an die Steuerung, und insbesondere auch an einen Zentralrechner geschickt werden, die Auskunft gibt, darüber, dass die Versorgungsleitung, d.h. die Energiezuführung einen Defekt aufweist.

Vom defekten Schutzschlauch bis zur Ausfall der Energiezuführung, also Defekt der einzelnen Leitungen, ist eine gewisse Zeitspanne zum Eingreifen und/oder Reparieren vorhanden. Die Zeit kann genutzt werden, um geplant eine Reparatur des Schutzschlauches durchzuführen oder ein Austausch der gesamten Versorgungsleitung, d.h. der gesamten Energiezuführung vorzunehmen. Das erfindungsgemäße Verfahren erhöht die Produktionssicherheit des Systems und dadurch einer kompletten Produktionsstraße maßgeblich.

Das Vergleichen des zweiten Fluiddruckverlaufs mit dem gespeicherten ersten Fluiddruckverlauf kann erfolgen, indem das Druckmaximum des zweiten Fluiddruckverlaufs mit dem Druckmaximum des ersten Fluiddruckverlaufs verglichen wird.

Ganz allgemein kann der Schutzschlauch zunächst mit Druckluft beaufschlagt werden, um einen konstanten Überdruck innerhalb des Schutzschlauches zu erzeuge, wobei anschließend die Druckluft abgeschaltet wird und ein Erfassen, insbesondere Messen des Druckes innerhalb des Schutzschlauches begonnen wird. Die Druckluftabfallkurve ist dann Indiz für einen unbeschädigten oder beschädigten Schutzschlauch. Wenn der Schutzschlauch beschädigt ist, dann ist zu erwarten, dass der Überdruck sich über das Leck im Schutzschlauch abbaut.

Alternativ kann in den Schutzschlauch lediglich ein Druckstoß eingebracht werden. Der Druckstoß kann insbesondere lediglich kurzzeitig erfolgen. Ein solcher Druckstoß kann ein Maß für die Intensität der Druckwelle darstellen, die auch zum Vergleichen herangezogen werden kann.

Insoweit kann auch folgendes Verfahren durchgeführt werden, bei dem das Vergleichen des zweiten Fluiddruckverlaufs mit dem gespeicherten ersten Fluiddruckverlauf erfolgt, indem das Druckmaximum des zweiten Fluiddruckverlaufs mit dem Druckmaximum des ersten Fluiddruckverlaufs verglichen wird:

Die Ventileinheit, beispielsweise das Pneumatikventil oder ein Magnetventil, das in einer Fluiddruckleitung angeordnet ist, die einen Druckerzeuger mit dem Inneren des Schutzschlauches verbindet, kann dazu ausgebildet und eingerichtet sein, durch kurzzeitiges Öffnen und anschließendes sofortiges wieder Schließen, einen plötzlichen Überdruck innerhalb des Schutzschlauches zu erzeugen. Ein solcher Überdruck kann an einer ersten Stelle des Schutzschlauches, insbesondere an einem ersten Ende des Schutzschlauches eingeleitet werden.

Ein Erfassungsmittel, insbesondere ein Drucksensor, ist an einer anderen, zweiten Stelle, insbesondere an einem zweiten Ende des Schutzschlauches platziert. Das Erfassungsmittel, insbesondere der Drucksensor ist somit separat, d.h. in einem Abstand von der ersten Stelle angeordnet, um an dieser zweiten Stelle den Fluiddruckverlauf zu erfassen. Beim Betätigen beispielsweise des Magnetventils entsteht eine Druckwelle innerhalb des Schutzschlauches. Diese Druckwelle kann durch den Sensor erfasst werden. Wenn der Schlauch defekt ist, bildet sich die Druckwelle nur ganz schwach aus.

Die Amplitude der Druckwelle kann als Kriterium für den Zustand des Schutzschlauches ausgewertet werden.

Ein Vorteil kann sein, dass der Schutzschlauch nicht vollständig abgedichtet sein muss. Es beruht demgemäß nur auf dem Prinzip der Ausbildung einer Druckwelle in einer geschlossenen Röhre.

Das Erzeugen des ersten Fluiddruckstoßes und das Erzeugen des zweiten Fluiddruckstoßes kann demgemäß an einer ersten Anschlussstelle des Schutzschlauches erfolgen, die ein erstes Ende einer zu überwachenden Leitungsstrecke der Versorgungsleitung bildet und das Erfassen des Fluiddrucks innerhalb des Schutzschlauches als erstem Fluiddruckverlauf und zweitem Fluiddruckverlauf kann dabei an einer von der ersten Anschlussstelle entfernten zweiten Anschlussstelle des Schutzschlauches erfolgen, die ein dem ersten Ende gegenüberliegendes zweites Ende der zu überwachenden Leitungsstrecke der Versorgungsleitung bildet. Es ist jedoch nicht zwingend erforderlich, dass das Erzeugen des jeweiligen Fluiddruckstoßes und das Erfassen des jeweiligen Fluiddrucks innerhalb des Schutzschlauches an gegenüberliegenden Enden des Schutzschlauches erfolgt. So kann ganz allgemein das Erzeugen des ersten Fluiddruckstoßes und das Erzeugen des zweiten Fluiddruckstoßes an einer ersten Anschlussstelle des Schutzschlauches erfolgen und das Erfassen des Fluiddrucks innerhalb des Schutzschlauches als erstem Fluiddruckverlauf und zweitem Fluiddruckverlauf an einer beliebigen zweiten Anschlussstelle des Schutzschlauches erfolgen.

Der erste Fluiddruckstoß und der zweite Fluiddruckstoß kann mit einer Druckstoßdauer von mindestens 0,1 bis maximal 0,5 Sekunden ausgeführt werden.

Das Erfassen des Fluiddrucks innerhalb des Schutzschlauches als ein erster Fluiddruckverlauf und das Erfassen des Fluiddrucks innerhalb des Schutzschlauches als ein zweiter Fluiddruckverlauf kann jeweils über einen Zeitabschnitt von 1,0 bis 5,0 Sekunden hinweg durchgeführt werden.

Das Ausgeben einer Verschleißwarnung kann dadurch erfolgen, dass das Vergleichen des zweiten Fluiddruckverlaufs mit dem ersten Fluiddruckverlauf automatisch von einer Steuervorrichtung durchgeführt wird, und im Falle, dass durch das Vergleichen ein Unterschied zwischen dem zweiten Fluiddruckverlauf und dem ersten Fluiddruckverlauf automatisch durch die Steuervorrichtung festgestellt wird, der einen vorgegebenen maximalen Toleranzunterschied überschreitet, die Steuervorrichtung dann ein die Verschleißwarnung kennzeichnendes Signal automatisch erzeugt.

Alle beschriebenen und offenbarten Arten von Verfahren können an einem Schutzschlauch durchgeführt werden, welcher in einem konstruktiv druck-undichtem Aufbau mit der einen oder den mehreren Leitungen zusammengebaut ist.

Alle beschriebenen und offenbarten Arten von Verfahren können von der Robotersteuerung des Industrieroboters durchgeführt werden. Insoweit kann die Robotersteuerung des Industrieroboters ausgebildet und eingerichtet sein, eines oder mehrere der beschriebenen und offenbarten Arten von Verfahren durchzuführen.

Die erfindungsgemäße Aufgabe wird außerdem gelöst durch eine Steuervorrichtung, insbesondere eines Industrieroboters, wobei die Steuervorrichtung eingerichtet und ausgelegt ist, ein Verfahren gemäß einem oder mehrerer der beschriebenen Ausführungsformen durchzuführen.

Verschiedene Ausführungsbeispiele der Erfindung sind exemplarisch in den beigefügten schematischen Zeichnungen dargestellt. Konkrete Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Ansicht eines Industrieroboters mit einer Energiezuführungsvorrichtung, die eine ausziehbare Versorgungsleitung aufweist,
- Fig. 2: eine schematische Darstellung eines überwachten Schlauchabschnitts eines beispielhaften Schutzschlauches und einer Steuervorrichtung mit einem angeschlossenen Druckerzeuger und Drucksensor,
- Fig. 3: ein Diagramm eines beispielhaften Referenzdruckverlaufs und eines beispielhaften erfassten Druckverlaufs mit einem Vergleich der beiden Druckmaxima, und
- Fig. 4: ein Diagramm eines beispielhaften Referenzdruckverlaufs und eines beispielhaften erfassten Druckverlaufs mit einem Vergleich der beiden Druckabfallkurven.

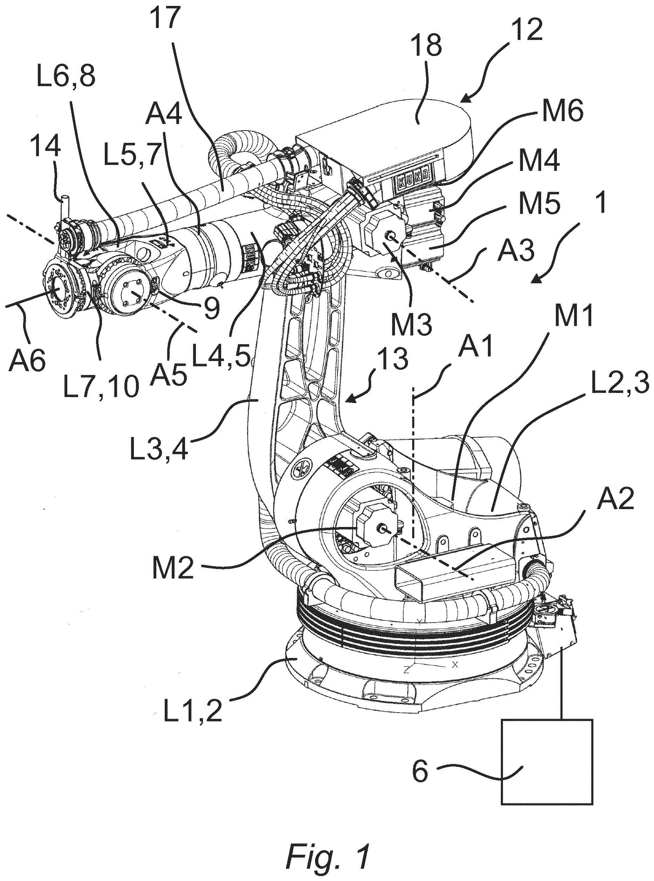

Die Fig. 1 zeigt einen Industrieroboter 1, der einen Roboterarm 13 und eine Robotersteuerung 6 aufweist. Der Roboterarm 2 umfasst im Falle des vorliegenden Ausführungsbeispiels mehrere nacheinander angeordnete und mittels Gelenke A1-A6 verbundene Glieder L1-L7. Bei den Gliedern L1-L7 handelt es sich insbesondere um ein Grundgestell 2 und ein relativ zum Grundgestell 2 um die vertikal verlaufende Achse A1 drehbar gelagertes Karussell 3. Weitere Glieder des Roboterarms 2 sind im Falle des vorliegenden Ausführungsbeispiels eine Schwinge 4, ein Grundarm 5, ein gabelförmiger Vorderarm 7, ein Handglied 8, und Flanschglied 10. Das Flanschglied 10 bildet eine Befestigungsvorrichtung zum Befestigen eines nicht näher dargestellten Endeffektors, beispielsweise eines Werkzeugs oder Greifers. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Grundarm 5 schwenkbar gelagert.

Der Roboterarm 13 ist im Falle des gezeigten Ausführungsbeispiels als ein Knickarmroboter ausgebildet, bei dem die mehreren Glieder L1-L7 in einer kinematischen Kette aufeinanderfolgend angeordnet und jeweils zwei benachbarte Glieder L1-L7 durch jeweils eines der Gelenke A1-A6 gegeneinander verstellbar verbunden sind, wobei ein proximales Endglied L1 das Grundgestell 2 bildet, das zum Befestigen des Knickarmroboters an einem Fundament ausgebildet ist, und ein distales Endglied L7 das Flanschglied 10 bildet, das zur Befestigung eines vom Knickarmroboter handzuhabenden Werkzeugs 9 ausgebildet ist. Die einzelnen Gelenke A1-A6 werden von jeweils einem der Motoren M1-M6 angetrieben.

Am Grundarm 5 ist eine Energiezuführungsvorrichtung 12 befestigt, die einen Leitungsspeicher 18 aufweist, in dem ein Teilabschnitt einer Versorgungsleitung 17 vorgehalten ist. Ein freier Abschnitt der Versorgungsleitung 17 ist außerhalb entlang des Roboterarms 13 geführt. Ein distales Ende der Versorgungsleitung 17 ist mittels eines Halters 14 beispielsweise an dem Endglied L7, d.h. an dem Flanschglied 10 festgelegt.

Die Versorgungsleitung 17 des Industrieroboters 1 ist entlang zumindest zweier der mehreren Glieder L1-L7 des Roboterarms 13 über wenigstens eines der mehreren Gelenke A1-A6 hinweg geführt und außerhalb des Roboterarms 13 angeordnet.

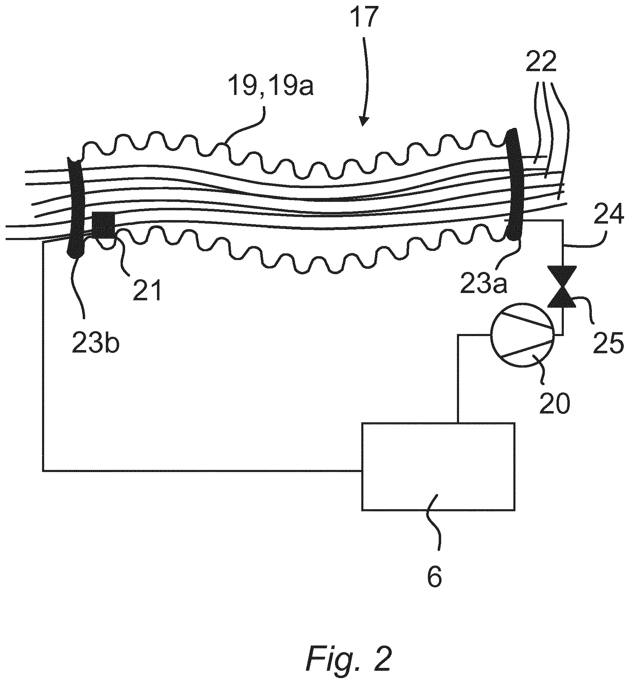

In der Fig. 2 ist ein überwachter Schlauchabschnitt 19a eines beispielhaften Schutzschlauches 19 der Versorgungsleitung 17 und einer Steuervorrichtung, der Robotersteuerung 6 mit einem angeschlossenen Druckerzeuger 20 und einem Drucksensor 21 schematisch gezeigt. Innerhalb des Schutzschlauches 19 verlaufen mehrere Leitungen 22. Der Schutzschlauch 19 ist an seinen beiden Enden mit jeweils einem Klemmstern 23a, 23b versehen. Über die beiden Klemmsterne 23a, 23b sind die Leitungen 22, die beispielsweise Einzelleitungen, Mehraderkabel oder Kabelbündel sein können, aus dem Schutzschlauch 19 herausgeführt bzw. in den Schutzschlauch 19 hineingeführt.

Das Einblasen von über den Umgebungsdruck der Versorgungsleitung 17 komprimierter Luft oder komprimiertem Gas in den Schutzschlauch 19 erfolgt dadurch, dass von dem Druckerzeuger 20 komprimierte Luft oder komprimiertes Gas über eine Fluidleitung 24 in das Innere des Schutzschlauches 19 geleitet wird und zwar über ein automatisch zu betätigendes Ventil 25 hinweg, welches zum Erzeugen des ersten Fluiddruckstoßes und des zweiten Fluiddruckstoßes kurzzeitig angesteuert von der Robotersteuerung 6 geöffnet wird.

Das Erzeugen des ersten Fluiddruckstoßes und das Erzeugen des zweiten Fluiddruckstoßes erfolgt beispielsweise an einer ersten Anschlussstelle des Schutzschlauches 19, die ein erstes Ende einer zu überwachenden Leitungsstrecke der Versorgungsleitung 17 bildet (Klemmstern 23a) und das Erfassen des Fluiddrucks innerhalb des Schutzschlauches 19 als erstem Fluiddruckverlauf und zweitem Fluiddruckverlauf erfolgt mittels des Drucksensors 21 an einer von der ersten Anschlussstelle entfernten zweiten Anschlussstelle des Schutzschlauches 19, die ein dem ersten Ende gegenüberliegendes zweites Ende der zu überwachenden Leitungsstrecke der Versorgungsleitung 17 bildet (Klemmstern 23b). In einer nicht näher dargestellten Abwandlung kann das Erzeugen des jeweiligen Fluiddruckstoßes und das Erfassen des jeweiligen Fluiddrucks auch an anderen Stellen des Schutzschlauches 19 erfolgen. Insbesondere kann der Drucksensor 21 außerhalb des Schutzschlauches 19 angeordnet und über einen eigenen Verbindungsschlauch mit dem Inneren des Schutzschlauches 19 verbunden sein.

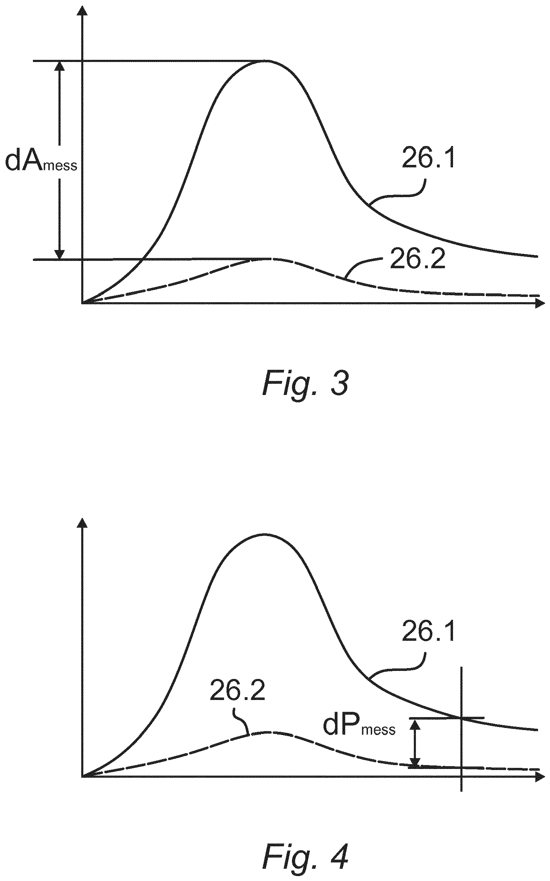

Die Fig. 3 zeigt schematisch und beispielhaft, wie das Vergleichen des zweiten Fluiddruckverlaufs 26.2 mit dem gespeicherten ersten Fluiddruckverlauf 26.1 erfolgt, indem das Druckmaximum des zweiten Fluiddruckverlaufs 26.2 mit dem Druckmaximum des ersten Fluiddruckverlaufs 26.1 verglichen wird (DAmess). Dargestellt ist ein Beispiel, bei dem ein Defekt des Schutzschlauches vorliegt und eine Verschleißwarnung von der Robotersteuerung 6 erzeugt und ausgegeben wird. Das Druckmaximum des zweiten Fluiddruckverlaufs 26.2 des defekten Schutzschlauches 19 liegt deutlich unter dem Druckmaximum des ersten Fluiddruckverlaufs 26.1 (Referenzdruckverlauf) eines unbeschädigten Schutzschlauches 19.

Die Fig. 4 zeigt schematisch und beispielhaft, wie das Vergleichen des zweiten Fluiddruckverlaufs mit dem gespeicherten ersten Fluiddruckverlauf erfolgt, indem ein nach dem Erreichen eines Druckmaximums auftretender Druckabfall im zweiten Fluiddruckverlauf mit einem nach dem Erreichen eines Druckmaximums aufgetretenen Druckabfall im ersten Fluiddruckverlauf verglichen wird (dPmess). Dargestellt ist ein Beispiel, bei dem ein Defekt des Schutzschlauches vorliegt und eine Verschleißwarnung von der Robotersteuerung 6 erzeugt und ausgegeben wird. Der Druckabfall des zweiten Fluiddruckverlaufs 26.2 des defekten Schutzschlauches 19 liegt deutlich unter dem Druckabfall des ersten Fluiddruckverlaufs 26.1 (Referenzdruckverlauf) eines unbeschädigten Schutzschlauches 19.

## Patentansprüche

1. Verfahren zum Überwachen einer Versorgungsleitung (17) eines Industrieroboters (1), die ein oder mehrere in einem Schutzschlauch (19) geführte Leitungen (22) aufweist, auf Verschleißschäden am Schutzschlauch (19), aufweisend die Schritte:
- Erzeugen eines ersten Fluiddruckstoßes innerhalb des Schutzschlauches (19),
- anschließendes Erfassen des Fluiddrucks innerhalb des Schutzschlauches (19) über einen vorgegebenen ersten Zeitabschnitt hinweg als einen ersten Fluiddruckverlauf (26.1),
- Speichern des ersten Fluiddruckverlaufs (26.1),
- Erzeugen eines zweiten Fluiddruckstoßes innerhalb des Schutzschlauches (19),
- anschließendes Erfassen des Fluiddrucks innerhalb des Schutzschlauches (19) über einen vorgegebenen zweiten Zeitabschnitt hinweg als einen zweiten Fluiddruckverlauf (26.2),
- Vergleichen des zweiten Fluiddruckverlaufs (26.2) mit dem gespeicherten ersten Fluiddruckverlauf (26.1),
- Ausgeben einer Verschleißwarnung, wenn ein durch das Vergleichen festgestellter Unterschied zwischen dem zweiten Fluiddruckverlauf (26.2) und dem ersten Fluiddruckverlauf (26.1) einen vorgegebenen maximalen Toleranzunterschied überschreitet.

2. Verfahren nach Anspruch 1, **dadurch gekennzeichnet, dass** das Erzeugen des ersten Fluiddruckstoßes und das Erzeugen des zweiten Fluiddruckstoßes durch Einblasen von über den Umgebungsdruck der Versorgungsleitung (17) komprimierter Luft oder komprimiertem Gas in den Schutzschlauch (19) erfolgen.

3. Verfahren nach Anspruch 2, **dadurch gekennzeichnet, dass** das Einblasen von über den Umgebungsdruck der Versorgungsleitung (17) komprimierter Luft oder komprimiertem Gas in den Schutzschlauch (19) dadurch erfolgt, dass von einem Druckerzeuger (20) komprimierte Luft oder komprimiertes Gas über eine Fluidleitung (24) in das Innere des Schutzschlauches (19) geleitet wird und zwar über ein automatisch zu betätigendes Ventil (25) hinweg, welches zum Erzeugen des ersten Fluiddruckstoßes und des zweiten Fluiddruckstoßes kurzzeitig geöffnet wird.

4. Verfahren nach einem der Ansprüche 1 bis 3, **dadurch gekennzeichnet, dass** das Vergleichen des zweiten Fluiddruckverlaufs (26.2) mit dem gespeicherten ersten Fluiddruckverlauf (26.1) erfolgt, indem ein nach dem Erreichen eines Druckmaximums auftretender Druckabfall im zweiten Fluiddruckverlauf (26.2) mit einem nach dem Erreichen eines Druckmaximums aufgetretenen Druckabfall im ersten Fluiddruckverlauf (26.1) verglichen wird.

5. Verfahren nach einem der Ansprüche 1 bis 3, **dadurch gekennzeichnet, dass** das Vergleichen des zweiten Fluiddruckverlaufs (26.2) mit dem gespeicherten ersten Fluiddruckverlauf (26.1) erfolgt, indem das Druckmaximum des zweiten Fluiddruckverlaufs (26.2) mit dem Druckmaximum des ersten Fluiddruckverlaufs (26.1) verglichen wird.

6. Verfahren nach einem der Ansprüche 1 bis 5, **dadurch gekennzeichnet, dass** das Erzeugen des ersten Fluiddruckstoßes und das Erzeugen des zweiten Fluiddruckstoßes an einer ersten Anschlussstelle des Schutzschlauches (19) erfolgt, die ein erstes Ende einer zu überwachenden Leitungsstrecke der Versorgungsleitung (17) bildet und das Erfassen des Fluiddrucks innerhalb des Schutzschlauches (19) als erstem Fluiddruckverlauf (26.1) und zweitem Fluiddruckverlauf (26.2) an einer von der ersten Anschlussstelle entfernten zweiten Anschlussstelle des Schutzschlauches (19) erfolgt, die ein dem ersten Ende gegenüberliegendes zweites Ende der zu überwachenden Leitungsstrecke der Versorgungsleitung (17) bildet.

7. Verfahren nach einem der Ansprüche 1 bis 6, **dadurch gekennzeichnet, dass** der erste Fluiddruckstoß und der zweite Fluiddruckstoß mit einer Druckstoßdauer von mindestens 0,1 bis maximal 0,5 Sekunden ausgeführt werden.

8. Verfahren nach einem der Ansprüche 1 bis 7, **dadurch gekennzeichnet, dass** das Erfassen des Fluiddrucks innerhalb des Schutzschlauches (19) als ein erster Fluiddruckverlauf und das Erfassen des Fluiddrucks innerhalb des Schutzschlauches (19) als ein zweiter Fluiddruckverlauf jeweils über einen Zeitabschnitt von 1,0 bis 5,0 Sekunden hinweg durchgeführt wird.

9. Verfahren nach einem der Ansprüche 1 bis 8, **dadurch gekennzeichnet, dass** das Ausgeben einer Verschleißwarnung dadurch erfolgt, dass das Vergleichen des zweiten Fluiddruckverlaufs (26.2) mit dem ersten Fluiddruckverlauf (26.1) automatisch von einer Steuervorrichtung (6) durchgeführt wird, und im Falle, dass durch das Vergleichen ein Unterschied zwischen dem zweiten Fluiddruckverlauf (26.2) und dem ersten Fluiddruckverlauf (26.1) automatisch durch die Steuervorrichtung (6) festgestellt wird, der einen vorgegebenen maximalen Toleranzunterschied überschreitet, die Steuervorrichtung (6) dann ein die Verschleißwarnung kennzeichnendes Signal automatisch erzeugt.

10. Verfahren nach einem der Ansprüche 1 bis 9, das an einem Schutzschlauch (19) durchgeführt wird, welcher in einem konstruktiv druck-undichtem Aufbau mit der einen oder den mehreren Leitungen (22) zusammengebaut ist.

11. Steuervorrichtung, insbesondere eines Industrieroboters, wobei die Steuervorrichtung eingerichtet und ausgelegt ist ein Verfahren gemäß einem der Ansprüche 1 bis 10 durchzuführen.

## Claims

1. A method for monitoring a supply line (17) of an industrial robot (1), which has one or more lines (22) guided in a protective tube (19), for wear damage to the protective tube (19), comprising the steps:
- generating a first fluid pressure surge within the protective tube (19),
- subsequent detection of the fluid pressure within the protective tube (19) over a predetermined first time period as a first fluid pressure curve (26.1),
- storing the first fluid pressure curve (26.1),
- generating a second fluid pressure surge within the protective tube (19),
- subsequent detection of the fluid pressure within the protective tube (19) over a predetermined second time period as a second fluid pressure curve (26.2),
- comparing the second fluid pressure profile (26.2) with the stored first fluid pressure profile (26.1),
- issue a wear warning if a difference between the second fluid pressure curve (26.2) and the first fluid pressure curve (26.1) determined by the comparison exceeds a predetermined maximum tolerance difference.

2. The method according to claim 1, **characterized in that** the generation of the first fluid pressure surge and the generation of the second fluid pressure surge take place by blowing air or compressed gas compressed via the ambient pressure of the supply line (17) into the protective tube (19).

3. The method according to claim 2, **characterized in that** the blowing of compressed air or compressed gas over the ambient pressure of the supply line (17) into the protective tube (19) is carried out **in that** compressed air or compressed gas via a pressure generator (20) Fluid line (24) is guided into the interior of the protective tube (19), specifically via an automatically operated valve (25), which is briefly opened to generate the first fluid pressure surge and the second fluid pressure surge.

4. The method according to any one of claims 1 to 3, **characterized in that** the comparison of the second fluid pressure profile (26.2) with the stored first fluid pressure profile (26.1) is carried out by a pressure drop occurring after reaching a pressure maximum in the second fluid pressure profile (26.2) with a after a pressure maximum has been reached, a pressure drop in the first fluid pressure curve (26.1) is compared.

5. The method according to any one of claims 1 to 3, **characterized in that** the comparison of the second fluid pressure profile (26.2) with the stored first fluid pressure profile (26.1) is carried out by the pressure maximum of the second fluid pressure profile (26.2) with the pressure maximum of the first fluid pressure profile (26.1) is compared.

6. The method according to any one of claims 1 to 5, **characterized in that** the generation of the first fluid pressure surge and the generation of the second fluid pressure surge takes place at a first connection point of the protective tube (19), which has a first end of a line section of the supply line (17) to be monitored. forms and the detection of the fluid pressure within the protective tube (19) as the first fluid pressure profile (26.1) and the second fluid pressure profile (26.2) at a second connection point of the protective tube (19) remote from the first connection point, which is a second end opposite the first end monitoring line section of the supply line (17) forms.

7. The method according to any one of claims 1 to 6, **characterized in that** the first fluid pressure surge and the second fluid pressure surge are carried out with a pressure surge duration of at least 0.1 to a maximum of 0.5 seconds.

8. The method according to any one of claims 1 to 7, **characterized in that** the detection of the fluid pressure within the protective tube (19) as a first fluid pressure curve and the detection of the fluid pressure within the protective tube (19) as a second fluid pressure curve in each case over a period of 1.0 to 5.0 seconds is performed.

9. The method according to any one of claims 1 to 8, **characterized in that** a wear warning is issued **in that** the comparison of the second fluid pressure profile (26.2) with the first fluid pressure profile (26.1) is carried out automatically by a control device (6), and in In the event that a comparison between the second fluid pressure curve (26.2) and the first fluid pressure curve (26.1) is automatically determined by the control device (6) and exceeds a predetermined maximum tolerance difference, the control device (6) then signals the wear warning generated automatically.

10. The method according to any one of claims 1 to 9, which is carried out on a protective tube (19) which is assembled in a structurally pressure-leaking structure with the one or more lines (22).

11. Control device, in particular an industrial robot, wherein the control device is set up and designed to carry out a method according to one of claims 1 to 10.

## Revendications

1. Procédé de surveillance d'une conduite d'alimentation (17) d'un robot industriel (1), qui comporte une ou plusieurs conduites (22) guidées dans un tube de protection (19), pour l'usure du tube de protection (19), comprenant les marches:
- générer une première surtension de fluide à l'intérieur du tube de protection (19),
- détection ultérieure de la pression de fluide à l'intérieur du tube de protection (19) sur une première période de temps prédéterminée en tant que première courbe de pression de fluide (26.1),
- mémoriser la première courbe de pression du fluide (26.1),
- générer une deuxième surtension de fluide à l'intérieur du tube de protection (19),
- détection ultérieure de la pression de fluide à l'intérieur du tube de protection (19) sur une deuxième période de temps prédéterminée en tant que seconde courbe de pression de fluide (26.2),
- comparer le deuxième profil de pression de fluide (26.2) avec le premier profil de pression de fluide stocké (26.1),
- émettre un avertissement d'usure si une différence entre la deuxième courbe de pression de fluide (26.2) et la première courbe de pression de fluide (26.1) déterminée par la comparaison dépasse une différence de tolérance maximale prédéterminée.

2. Procédé selon la revendication 1, **caractérisé en ce que** la génération de la première augmentation de pression de fluide et la génération de la seconde augmentation de pression de fluide ont lieu en soufflant de l'air ou du gaz comprimé comprimé via la pression ambiante de la conduite d'alimentation (17) dans le tube de protection (19).

3. Procédé selon la revendication 2, **caractérisé en ce que** le soufflage d'air comprimé ou de gaz comprimé sur la pression ambiante de la conduite d'alimentation (17) dans le tube de protection (19) est effectué dans cet air comprimé ou gaz comprimé via un générateur de pression (20) La conduite de fluide (24) est guidée à l'intérieur du tube de protection (19), en particulier via une vanne à commande automatique (25), qui est brièvement ouverte pour générer la première surtension de fluide et la seconde surtension de fluide .

4. Procédé selon l'une quelconque des revendications 1 à 3, **caractérisé en ce que** la comparaison du deuxième profil de pression de fluide (26.2) avec le premier profil de pression de fluide stocké (26.1) est effectuée par une chute de pression survenant après avoir atteint une pression maximum dans le deuxième profil de pression de fluide (26.2) avec a après qu'un maximum de pression a été atteint, une chute de pression dans la première courbe de pression de fluide (26.1) est comparée.

5. Procédé selon l'une quelconque des revendications 1 à 3, **caractérisé en ce que** la comparaison du deuxième profil de pression de fluide (26.2) avec le premier profil de pression de fluide stocké (26.1) est effectuée par la pression maximale de la deuxième pression de fluide le profil (26.2) avec la pression maximale du premier profil de pression de fluide (26.1) est comparé.

6. Procédé selon l'une quelconque des revendications 1 à 5, **caractérisé en ce que** la génération de la première surtension de fluide et la génération de la seconde surtension de fluide ont lieu à un premier point de connexion du tube de protection (19), qui a une première extrémité d'une section de ligne de la ligne d'alimentation (17) à surveiller. formes et la détection de la pression de fluide à l'intérieur du tube de protection (19) en tant que premier profil de pression de fluide (26.1) et second profil de pression de fluide (26.2) à un deuxième point de connexion du tube de protection (19) éloigné de la première connexion point, qui est une seconde extrémité opposée à la première section de ligne de surveillance d'extrémité de la ligne d'alimentation (17).

7. Procédé selon l'une quelconque des revendications 1 à 6, **caractérisé en ce que** la première montée en pression de fluide et la seconde montée en pression de fluide sont réalisées avec une durée de montée en pression d'au moins 0,1 à un maximum de 0,5 seconde.

8. Procédé selon l'une quelconque des revendications 1 à 7, **caractérisé en ce que** la détection de la pression de fluide à l'intérieur du tube de protection (19) comme première courbe de pression de fluide et la détection de la pression de fluide à l'intérieur du tube de protection (19) comme seconde courbe de pression de fluide dans chaque cas sur une période de 1,0 à 5,0 secondes est effectuée.

9. Procédé selon l'une quelconque des revendications 1 à 8, **caractérisé en ce qu'**un avertissement d'usure est émis **en ce que** la comparaison du deuxième profil de pression de fluide (26.2) avec le premier profil de pression de fluide (26.1) est effectuée automatiquement par un dispositif de commande (6), et dans le cas où une comparaison entre la deuxième courbe de pression de fluide (26.2) et la première courbe de pression de fluide (26.1) est automatiquement déterminée par le dispositif de commande (6) et dépasse une différence de tolérance maximale prédéterminée, le dispositif de commande (6) signale alors l'avertissement d'usure généré automatiquement.

10. Procédé selon l'une quelconque des revendications 1 à 9, qui est réalisé sur un tube de protection (19) qui est assemblé dans une structure structurellement à fuite de pression avec la ou les lignes (22).

11. Dispositif de commande, notamment un robot industriel, dans lequel le dispositif de commande est mis en place et conçu pour mettre en oeuvre un procédé selon l'une des revendications 1 à 10.
